# EUROPÄISCHE PATENTSCHRIFT

(11) **EP 2 446 179 B1**
(45) Veröffentlichungstag und Bekanntmachung des Hinweises auf die Patenterteilung: **03.07.2013**
(21) Anmeldenummer: 10718164.6
(22) Anmeldetag: 06.05.2010
(51) Int. Cl.: F16K 27/02

(54) **VENTILKÖRPER**
VALVE BODY
CORPS DE VANNE

(30) Priorität: 25.06.2009 DE 102009030930
(43) Veröffentlichungstag der Anmeldung: 02.05.2012
(73) Patentinhaber: GEMÜ Gebrüder Müller Apparatebau GmbH & Co. KG, 74653 Ingelfingen (DE)
(72) Erfinder: MÜLLER, Fritz, 74653 Ingelfingen (DE); HILLER, Martin, 74906 Bad Rappenau (DE)
(74) Vertreter: Dreiss
(86) Internationale Anmeldenummer: PCT/EP2010/056161
(87) Internationale Veröffentlichungsnummer: WO 2010/149421

(56) Entgegenhaltungen:
- EP-A2- 0 463 302
- DE-A1- 2 257 161
- FR-A- 1 326 629
- FR-A1- 2 605 380
- US-A- 3 336 938

## Beschreibung

Die Erfindung betrifft einen Ventilkörper für durchströmende Fluide, mit einer Durchgangsleitung und einer Einrichtung zur Aufnahme eines Absperr- oder Dosierventils, wobei im Ventilkörper ein das Fluid führender, insbesondere einteiliger Inliner angeordnet ist, wobei der Ventilkörper teilbar ist.

Ventilkörper, insbesondere für Membranventile, sind in den unterschiedlichsten Bauformen bekannt. Üblicherweise besitzen diese Ventilkörper eine Durchgangsleitung für das Fluid und eine Einrichtung zur Aufnahme eines Absperr- oder Dosierventils. Mittels dieses Absperr- oder Dosierventils kann der Fluidstrom vollständig unterbrochen oder nur gedrosselt oder dosiert werden. Um optimale Strömungsverhältnisse innerhalb des Ventilkörpers zu erzielen, kann dieser zum Beispiel mit einem Einsatz, einem sogenannten Inliner versehen werden, dessen Außenoberfläche an der Innenseite des Ventilkörpers anliegt und dessen Innenoberfläche für optimale Strömungsverhältnisse ausgestaltet ist. Auf diese Weise können auch auf-wändig herstellbare, zum Beispiel Hinterschneidungen auf-weisende, Konturen im Strömungsweg des Fluides erzeugt werden.

Inliner werden aber auch bei Ventilkörpern für aggressive oder, als Verschleißteil, z.B. bei abrasiven Medien verwendet, da der Inliner aus einem anderen Werkstoff, zum Beispiel Kunststoff, hergestellt werden kann, wohingegen der Ventilkörper zum Beispiel aus Metall besteht. Als nachteilig hat sich jedoch herausgestellt, dass der Inliner aus einem flexiblen, insbesondere weichelastischen, Material bestehen muss, da er durch eine der im Ventilkörper vorhandenen Öffnungen eingesetzt werden muss, üblicherweise über die Einrichtung zur Aufnahme des Ventils. Dabei muss der Inliner deformiert werden. Dies kann aber nur mit einem Inliner erfolgen, der bei diesem Vorgang nicht beschädigt wird. Derartige Inliner müssen dann aber an mehreren Stellen mit der Innenoberfläche des Ventilkörpers verankert werden, so dass sie ihre Lage und insbesondere ihre Kontur beibehalten, auch wenn hohe Strömungsgeschwindigkeiten und somit hohe Strömungskräfte vorherrschen.

Aus der DE 2 257 161 A, der EP 0 463 302 A und der US 3 336 938 A sind Ventilkörper bekannt, deren Ventilgehäuse teilbar und aufklappbar sind. Durch eine Verschraubung wird werden die beiden Gehäusehälften aneinander fixiert. Für die Verschraubung bedarf es Überwurfmuttern (DE 2 257 161 A, der EP 0 463 302 A) und an jeder Gehäusehälfte Gewindeabschnitte, über welche die Überwurfmutter geschraubt wird. Bei der US 3 336 938 A werden die beiden Gehäusehälften miteinander verflanscht.

Der Erfindung liegt die Aufgabe zugrunde, einen Ventilkörper bereitzustellen, der zum einen einfacher mit einem Inliner versehen werden kann, wobei der Inliner leicht getauscht werden kann, indem das Ventilgehäuse schnell und einfach geöffnet werden kann.

Diese Aufgabe wird bei einem Ventilkörper der eingangs genannten Art erfindungsgemäß dadurch gelöst, dass die Ventilkörperteile miteinander verzapfbar sind, wobei jeder Ventilkörperteil einen Teil eines Zapfens aufweist, auf welchen eine Hülse aufschiebbar ist.

Beim erfindungsgemäßen Ventilkörper muss der Inliner nicht mehr über eine Strömungsöffnung oder die Einrichtung zur Aufnahme des Absperr- oder Dosierventils durch Verformung des Inliners eingepresst werden, sondern der Ventilkörper wird geöffnet, da er teilbar ausgeführt ist. Die Teilung ist so gestaltet, dass der Inliner ohne Verformung in den geteilten Ventilkörper eingesetzt werden kann und die Teile des Ventilkörpers anschließend zusammengesetzt werden. Die Montage wird dadurch wesentlich vereinfacht, insbesondere kann sie auch automatisch erfolgen. Ein weiterer Vorteil besteht darin, dass im Reparatur- oder Inspektionsfall der Ventilkörper wieder geteilt und der Inliner entnommen und gegebenenfalls durch einen neuen Inliner ausgetauscht werden kann. Das Fluid wird vollständig im Inliner geführt und hat keinen Kontakt zum Ventilkörper. Der Ventilkörper kann daher aus dem für den Anwendungsfall am geeignetsten Material, insbesondere aus Metall und/oder Kunststoff, hergestellt sein.

Dabei sind die Ventilkörperteile, insbesondere die Gehäuseteile, miteinander verzapfbar. Ein einfaches Lösen ist daher jederzeit möglich. Zum schnellen Fixieren weisen die Ventilkörperteile, insbesondere die Gehäuseteile, einen Teil eines Zapfens auf, auf welchen eine Hülse aufschiebbar ist. Dabei kann der Zapfen konisch oder kegelstumpfförmig und die Hülse als Konushülse ausgebildet sein. Die endgültige Fixierung erfolgt dann über den Flansch, der mit dem Rohrflansch verbunden, insbesondere verschraubt, wird.

Bei einem besonders bevorzugten Ausführungsbeispiel weist der Ventilkörper zwei Halbschalen auf, insbesondere wird der Ventilkörper von diesen beiden Halbschalen gebildet. Die beiden Halbschalen umschließen demnach den in die Halbschalen eingesetzten Inliner und halten diesen fest beziehungsweise stützen diesen ab. Insbesondere sind die Halbschalen spiegelsymmetrisch zueinander ausgebildet. Die Herstellungskosten können dadurch stark reduziert werden, da die spiegelsymmetrisch ausgebildeten Spritzguss- oder Druckgussformen preiswert herstellbar sind.

Ein besonders bevorzugtes Ausführungsbeispiel sieht vor, dass die Teilungsebene durch die Längsmittelachse des Ventilkörpers verläuft. Dabei teilt die Teilungsebene die Durchgangsleitung entlang deren Längsachse. Alternativ oder zusätzlich kann die Teilungsebene durch eine Symmetrieebene der Einrichtung zur Aufnahme des Ventils verlaufen. Diese Einrichtung weist zum Beispiel einen Flansch auf, so dass das Absperr- oder Dosierventil angeflanscht werden kann. Vorteilhaft entspricht die erste Teilungsebene der zweiten Teilungsebene. Dieser Flansch hat zudem den Vorteil, dass nach dem Einsetzen des Inliners und Einfügen des Ventils, das Ventilgehäuse an diesem Flansch angeflanscht wird und dadurch die Ventilkörperteile miteinander verbunden und fixiert und der Inliner im Ventilgehäuse gehalten werden.

Endet, wie bei einem bevorzugten Ausführungsbeispiel der Erfindung, die Durchgangsleitung in zwei Flanschen, dann kann der Ventilkörper ohne zusätzliche Verbindungsmittel dadurch in seiner Endlage oder Arbeitslage fixiert werden, dass die Flansche des Ventilkörpers an die das Fluid führenden Rohrleitungen angeflanscht wird.

Dadurch, dass der Ventilkörper teilbar ist, kann der Inliner sich auch in axialer Richtung bis über die Flansche hinaus erstrecken und die Flansche hintergreifen. Der Inliner kann sogar als Dichtung zwischen den Flanschen des Ventilkörpers und den Flanschen der Rohrleitungen fungieren.

Vorteilhaft kann der Inliner weichelastisch oder aber auch steif beziehungsweise hart ausgebildet sein und besteht zum Beispiel aus Kunststoff, insbesondere einem Elastomer oder aus PUR. Vor allem harte Inliner besitzen den wesentlichen Vorteil, dass ihre Innenoberfläche eine für den Strömungsverlauf des Fluids optimale Kontur aufweisen können, wobei die Kontur von der Strömungsrichtung abhängig sein kann. Außerdem kann der Inliner auch mit einem Dichtsitz, z.B. einem Steg, für das Absperr- oder Dosierventil, insbesondere eine Membrane, versehen sein.

Ein besonders bevorzugtes Ausführungsbeispiel der Erfindung sieht vor, dass der Ventilkörper als aufklappbares Gehäuse mit einer zwei Gehäuseteile, insbesondere zwei Gehäusehälften, miteinander verbindenden Schwenkachse ausgebildet ist. Die Schwenkachse durchgreift das freie Ende von Fortsätzen oder Schwenkarmen, wobei die Schwenkachse lediglich die Aufgabe besitzt, die beiden Gehäuseteile beim Schwenkvorgang definiert zu führen, so dass sie beim Aufschwenk- und Zuschwenkvorgang den Inliner nicht beschädigen. Die Schwenkachse kann von Zapfen gebildet sein, so dass die beiden Gehäuseteile nach dem Aufschwenken voneinander in Richtung der Schwenkachse abgezogen oder ineinander gesteckt werden können.

Bei einem bevorzugten Ausführungsbeispiel ist vorgesehen, dass der Inliner an seiner Außenseite mit einer radial in Richtung des Ventilkörpergehäuses abragenden Dichtung versehen ist. Diese Dichtung liegt insbesondere in der Trennebene der Ventilkörperteile. Hierdurch wird der Vorteil geschaffen, dass dann, wenn der Inliner undicht wird, das Ventilgehäuse nach wie vor dicht ist, da die Ventilkörperteile in der Trennungs-ebene über die Dichtung nach außen hin abgedichtet sind.

Zur Aufnahme der Dichtung, die insbesondere als Flachdichtung ausgebildet ist, weist wenigstens eines der Ventilkörperteile in der Trennebene an der Innenoberfläche eine die Dichtung aufnehmende Nut auf. Die Ventilkörperteile oder Gehäusehälften liegen nach dem Fügen nach wie vor exakt und spielfrei aneinander an.

Weitere Vorteile, Merkmale und Einzelheiten der Erfindung ergeben sich aus den Unteransprüchen sowie der nachfolgenden Beschreibung, in der unter Bezugnahme auf die Zeichnung ein besonders bevorzugtes Ausführungsbeispiel im Einzelnen beschrieben ist. Dabei können die in der Zeichnung dargestellten sowie in der Beschreibung und in den Ansprüchen erwähnten Merkmale jeweils einzeln für sich oder in beliebiger Kombination erfindungswesentlich sein. In der Zeichnung zeigen:

Figur 1 eine perspektivische Ansicht einer Ausführungsform des erfindungsgemäßen Ventilkörpers mit eingesetztem Inliner;

Figur 2 einen Längsschnitt II-II durch den Ventilkörper gemäß Figur 1;

Figur 3 eine perspektivische Ansicht des geöffneten Ventilkörpers mit entnommenem Inliner;

Figur 4 einen Schnitt IV - IV gemäß Figur 1; und

Figur 5 eine vergrößerte Wiedergabe des Ausschnitts IV gemäß Figur 4.

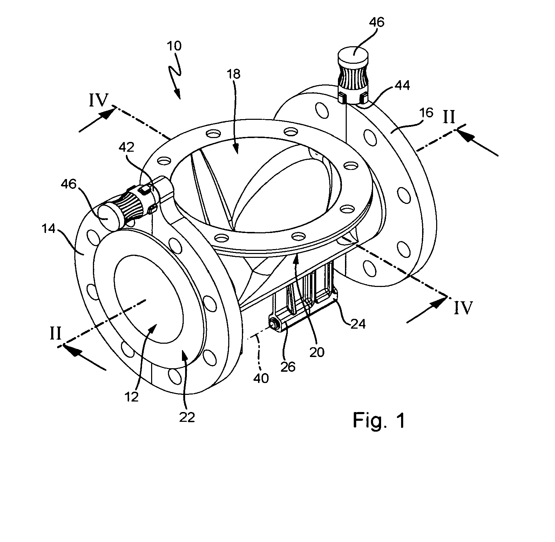

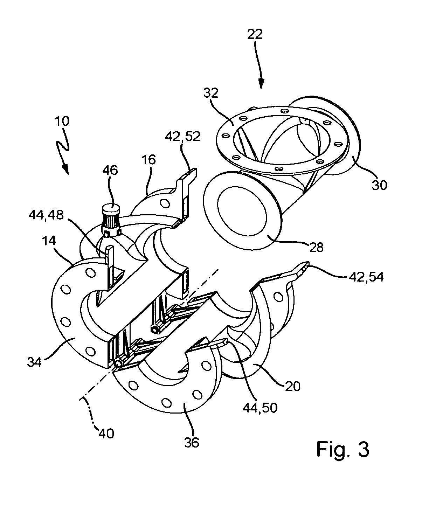

In der Figur 1 ist mit dem Bezugszeichen 10 ein Ventilkörper bezeichnet, welcher für durchströmende Fluide verwendet wird und eine Durchgangsleitung 12 aufweist, welche in einem ersten Flansch 14 und einem zweiten Flansch 16 endet. An diese Flansche 14 und 16 werden (nicht dargestellte) Rohrleitungen, die ihrerseits einen Befestigungsflansch aufweisen, angeflanscht. Der Ventilkörper 10 weist außerdem eine insgesamt mit 18 bezeichnete Einrichtung zur Aufnahme eines Absperr- oder Dosierventils auf, welches einen allgemein bekannten Aufbau aufweist und daher nicht dargestellt. Diese Einrichtung 18 besitzt einen dritten Flansch 20, an welchem das Ventil, beziehungsweise dessen Gehäuse, befestigt werden kann, so dass es die Durchgangsleitung absperren kann beziehungsweise das darin strömende Fluid dosiert werden kann. Weiterhin sind Abschnitte eines insgesamt mit 22 bezeichneten Inliners erkennbar, welcher im Ganzen in Figur 3 dargestellt ist. Schließlich sind bandartige Schwenkarme oder Fortsätze 24 und 26 erkennbar, über welche, wie weiter unten näher beschrieben, der Ventilkörper 10 aufgeschwenkt werden kann.

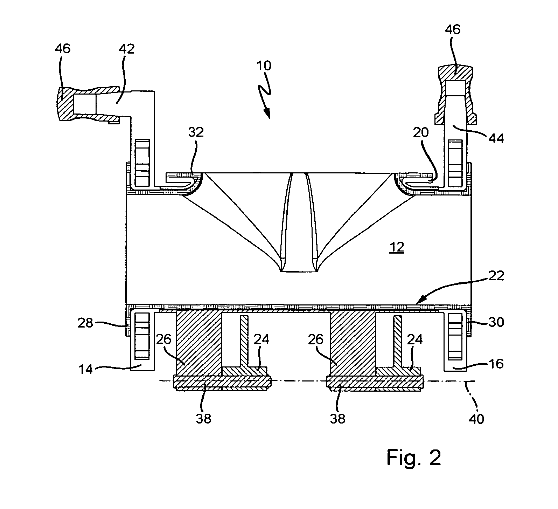

Die Figur 2 zeigt den Längsschnitt II-II durch den Ventilkörper 10 gemäß Figur 1, wobei deutlich der Inliner 22, der in den Ventilkörper 10 eingesetzt ist, erkennbar ist. Dieser Inliner 22 bildet die Durchgangsleitung 12 und hintergreift die beiden Flansche 14 und 16 mit einem flanschartigen Ende 28 und 30 und hintergreift auch den dritten Flansch 20 mit einem Ende 32.

Es ist problemlos nachvollziehbar, dass aufgrund der vielen Hinterschneidungen der Inliner 22 flexibel ausgestaltet sein muss, um in den Ventilkörper 10 eingesetzt werden zu können. Um aber auch nicht flexible Inliner 22 einsetzen zu können, ist der Ventilkörper 10 erfindungsgemäß teilbar ausgestaltet, wobei er in der in Figur 3 dargestellten Ausführungsform von zwei Halbschalen 34 und 36 gebildet wird.

In der Figur 2 ist erkennbar, dass die beiden Fortsätze 24 und 26 an ihren freien Enden jeweils von einem Bolzen 38 durchgriffen sind, die eine Schwenkachse 40 definieren, um welche die beiden Halbschalen 34 und 36 geschwenkt werden können. Schließlich ist in der Figur 2 noch erkennbar, dass die beiden Flansche 14 und 16 mit von den Flanschen radial und axial abragenden Zapfen 42 und 44 versehen sind, auf welche Hülsen 46 aufgesteckt sind. Die Zapfen 42 und 44 besitzen ein kegelstumpfförmiges Ende und die Hülsen 46 sind entsprechend kegelstumpfförmig ausgebildet, so dass die Zapfen 42 und 44 und die Hülsen 46 miteinander verkeilt werden können.

In der Figur 3 ist erkennbar, dass der radial vom Flansch 14 abragende Zapfen 44 von zwei Zapfenhälften gebildet wird, wobei die eine Zapfenhälfte 48 an der Halbschale 34 und die andere Zapfenhälfte 50 an der Halbschale 36 angeformt ist. Beim Aufschieben der Hülse 46 werden also die beiden Zapfenhälften 48 und 50 und dadurch die Halbschalen 34 und 36 miteinander verbunden. Der Zapfen 42 ragt in axialer Richtung ab, wobei auch bei dieser Ausführungsform die Zapfenhälfte 52 an der Halbschale 34 und die Zapfenhälfte 54 an der Halbschale 36 angeformt ist. Auch hier fixiert die Hülse 46 die beiden Halbschalen 34 und 36 miteinander.

In der Figur 3 ist leicht erkennbar, dass trotz der Hinterschneidungen von Ventilkörper 10 und Inliner 22 der Inliner 22 problemlos in die beiden geöffneten Halbschalen 34 und 36 eingesetzt werden kann und anschließend die beiden Halbschalen 34 und 36 um die Schwenkachse 40 zugeschwenkt und mit den Hülsen 46 gesichert werden können. Nach dem Anflanschen der Rohrleitungen an die Flansche 14 und 16 sind die Halbschalen 34 und 36 in ihrer geschlossenen Lage fixiert und stützen den eingelegten Inliner 22 ab. Der Inliner 22 kann aus einem steifen oder aus einem weichelastischen Material bestehen.

Zu Service- oder Reparaturzwecken kann der erfindungsgemäße Ventilkörper 10 problemlos geöffnet und der Inliner 22 entnommen und ausgetauscht werden. Es besteht auch die Möglichkeit, dass die beiden Halbschalen 34 und 36 in geöffnetem Zustand von den Bolzen 38 abgezogen werden können, so dass im Bedarfsfall auch die eine oder andere Halbschale 34 oder 36 ausgewechselt werden kann.

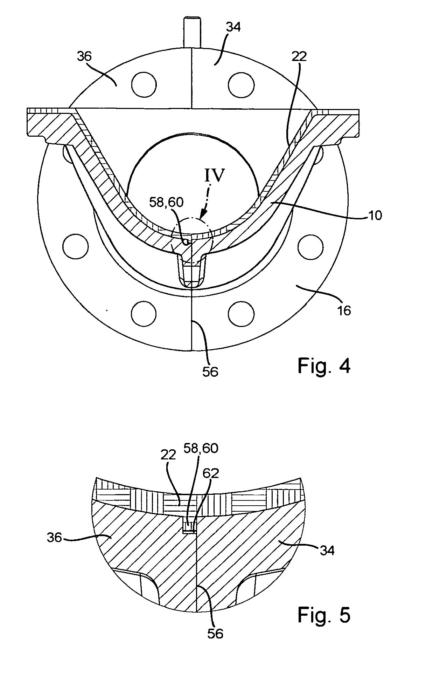

Die Figur 4 zeigt einen Schnitt IV - IV gemäß Figur 1, wobei deutlich der in das Gehäuse des Ventilkörpers 10 eingelegte Inliner 22 erkennbar ist. die Trennebene zwischen den beiden Halbschalen 34 und 36 ist mit 56 bezeichnet und es ist erkennbar, dass der Inliner an seiner Außenseite in dieser Trennebene 56 einen radial abragenden Fortsatz 58 in Richtung des Gehäuses des Ventilkörpers 10. Dieser Fortsatz 58 dient als Dichtung 60, zum Abdichten der beiden Halbschalen 34 und 36. Die Dichtung 60 liegt in oder parallel angrenzend zur Trennebene 56 und die Halbschale 36 besitzt an diese Trennebene 56 angrenzend an der Innenseite eine Nut 62, in welcher die Dichtung 60 zu liegen kommt. Da die Dichtung 60 nicht nur an der dargestellten Unterseite sondern auch an der Oberseite am Inliner 22 angeformt ist, ist der gesamte, in der Trennebene 56 liegende Spalt des Ventilkörpers 10 abgedichtet. Es bedarf keiner separaten Dichtungen zwischen den beiden Halbschalen 34 und 36, da das Fluid ausschließlich den Inliner 22 durchströmt. Sollte diese undicht werden, dann wird der Ventilkörper 10 weiterhin über die am Inliner 22 angeformte Dichtung 60 abgedichtet.

## Patentansprüche

1. Ventilkörper (10) für durchströmende Fluide, mit einer Durchgangsleitung (12) und einer Einrichtung (18) zur Aufnahme eines Absperr- oder Dosierventils, wobei im Ventilkörper (10) ein das Fluid führender, insbesondere einteiliger Inliner (22) angeordnet ist, wobei der Ventilkörper (10) in Ventilkörperteile teilbar ist, **dadurch gekennzeichnet, dass** die Ventilkörperteile miteinander verzapfbar sind, wobei jeder Ventilkörperteil einen Teil eines Zapfens (42, 44) aufweist, auf welchen eine Hülse (46) aufschiebbar ist.

2. Ventilkörper nach Anspruch 1, **dadurch gekennzeichnet, dass** der Zapfen (42, 44) konisch oder kegelstumpfförmig und die Hülse (46) als Konushülse ausgebildet sind.

3. Ventilkörper nach Anspruch 1 oder 2, **dadurch gekennzeichnet, dass** der Ventilkörper (10) zwei Halbschalen (34 und 36) aufweist und insbesondere von diesen gebildet wird.

4. Ventilkörper nach Anspruch 3, **dadurch gekennzeichnet, dass** die Halbschalen (34 und 36) spiegelsymmetrisch zueinander ausgebildet ist.

5. Ventilkörper nach einem der vorhergehenden Ansprüche, **dadurch gekennzeichnet, dass** die Teilungsebene durch die Längsmittelachse des Ventilkörpers (10) verläuft.

6. Ventilkörper nach einem der vorhergehenden Ansprüche, **dadurch gekennzeichnet, dass** die Teilungsebene durch eine Symmetrieebene der Einrichtung (18) zur Aufnahme des Ventils verläuft.

7. Ventilkörper nach einem der vorhergehenden Ansprüche, **dadurch gekennzeichnet, dass** die Durchgangsleitung (12) in Flanschen (14 und 16) endet.

8. Ventilkörper nach Anspruch 7, **dadurch gekennzeichnet, dass** der Inliner (22) sich in axialer Richtung bis über die Flansche (14 und 16) erstreckt.

9. Ventilkörper nach einem der vorhergehenden Ansprüche, **dadurch gekennzeichnet, dass** der Inliner (22) weichelastisch oder steif ist und insbesondere aus einem weichelastischen oder harten Kunststoff, zum Beispiel einem Elastomer oder PUR, besteht.

10. Ventilkörper nach einem der vorhergehenden Ansprüche, **dadurch gekennzeichnet, dass** der Ventilkörper (10) als aufklappbares Gehäuse mit einer zwei Gehäuseteile, insbesondere Gehäusehälften, miteinander verbindenden Schwenkachse (40) ausgebildet ist.

11. Ventilkörper nach einem der vorhergehenden Ansprüche, **dadurch gekennzeichnet, dass** der Inliner (22) an seiner Außenseite mit einer radial in Richtung des Ventilkörpergehäuses abragenden Dichtung (60) versehen ist.

12. Ventilkörper nach Anspruch 11, **dadurch gekennzeichnet, dass** die Dichtung in der Trennebene der Ventilkörperteile liegt.

13. Ventilkörper nach Anspruch 11 oder 12, **dadurch gekennzeichnet, dass** wenigstens eines der Ventilkörperteile in der Trennebene an der Innenoberfläche eine die Dichtung aufnehmende Nut (62) aufweist.

## Claims

1. A valve body (10) for fluids flowing through, having a through line (12) and a device (18) for receiving a shutoff or metering valve, an inliner (22), in particular in one piece, carrying the fluid being disposed in the valve body (10), and the valve body (10) being separable into valve body parts, **characterized in that** the valve body parts can be joined together with pegs, and each valve body part has one part of a peg (42, 44) onto which a sheath (46) can be slipped.

2. The valve body of claim 1, **characterized in that** the peg (42, 44) is embodied conically or frustoconically, and the sheath (46) is embodied as a conical sheath.

3. The valve body of claim 1 or 2, **characterized in that** the valve body (10) has two half-shells (34 and 36) and in particular is formed by them.

4. The valve body of claim 3, **characterized in that** the half-shells (34 and 36) are embodied mirror-symmetrically to one another.

5. The valve body of one of the foregoing claims, **characterized in that** the plane of separation extends through the longitudinal center axis of the valve body (10).

6. The valve body of one of the foregoing claims, **characterized in that** the plane of separation extends through a plane of symmetry of the device (18) for receiving the valve.

7. The valve body of one of the foregoing claims, **characterized in that** the through line (12) ends in flanges (14 and 16).

8. The valve body of claim 7, **characterized in that** the inliner (22) extends in the axial direction to beyond the flanges (14 and 16).

9. The valve body of one of the foregoing claims, **characterized in that** the inliner (22) is highly elastic or rigid and in particular comprises a highly elastic or hard plastic, such as an elastomer or PUR.

10. The valve body of one of the foregoing claims, **characterized in that** the valve body (10) is embodied as a hinged housing, with a pivot axis (40) connecting two housing parts, in particular housing halves, to one another.

11. The valve body of one of the foregoing claims, **characterized in that** the inliner (22) is provided on its outside with a seal (60) protruding radially in the direction of the valve body housing.

12. The valve body of claim 11, **characterized in that** the seal is located in the plane of separation of the valve body parts.

13. The valve body of claim 11 or 12, **characterized in that** at least one of the valve body parts, in the plane of separation at the inner surface, has a groove (62) receiving the seal.

## Revendications

1. Corps de vanne (10) pour fluides s'écoulant à travers ce corps de vanne, comprenant une conduite de passage (12) et un dispositif (18) pour la réception d'une vanne d'arrêt ou d'une vanne doseuse, un revêtement intérieur (22), en particulier d'une seule pièce, de guidage du fluide étant disposé dans le corps de vanne (10), le corps de vanne (10) pouvant être divisé en plusieurs parties, **caractérisé en ce que** les parties du corps de vanne peuvent être assemblées entre elles, à tenon et mortaise, chaque partie du corps de vanne présentant une partie d'un tenon (42, 44) sur laquelle un manchon (46) peut être monté coulissant.

2. Corps de vanne selon la revendication 1, **caractérisé en ce que** le tenon (42, 44) est conique ou tronconique et le manchon (46) est conçu comme un manchon conique.

3. Corps de vanne selon la revendication 1 ou 2, **caractérisé en ce que** le corps de vanne (10) comprend deux demi-coques (34 et 36) et est notamment formé par celles-ci.

4. Corps de vanne selon la revendication 3, **caractérisé en ce que** les demi-coques (34 et 36) sont symétriques l'une à l'autre.

5. Corps de vanne selon l'une quelconque des revendications précédentes, **caractérisé en ce que** le plan de séparation s'étend à travers l'axe longitudinal médian du corps de vanne (10).

6. Corps de vanne selon l'une quelconque des revendications précédentes, **caractérisé en ce que** le plan de séparation s'étend à travers un plan de symétrie du dispositif (18) destiné à loger la vanne.

7. Corps de vanne selon l'une quelconque des revendications précédentes, **caractérisé en ce que** la conduite de passage (12) termine dans des rebords (14 et 16).

8. Corps de vanne selon la revendication 7, **caractérisé en ce que** le revêtement intérieur (22) s'étend dans la direction axiale jusqu'au-dessus des rebords (14 et 16).

9. Corps de vanne selon l'une quelconque des revendications précédentes, **caractérisé en ce que** le revêtement intérieur (22) est élastique et souple ou rigide et est composé en particulier d'une matière plastique élastique et souple ou dure, par exemple un élastomère ou du polyuréthane.

10. Corps de vanne selon l'une quelconque des revendications précédentes, **caractérisé en ce que** le corps de vanne (10) est conçu comme un carter dépliable comprenant un axe de pivotement (40) reliant ensemble deux parties de carter, en particulier deux moitiés de carter.

11. Corps de vanne selon l'une quelconque des revendications précédentes, **caractérisé en ce que** le revêtement intérieur (22) est pourvu sur sa face extérieure d'un joint (60) faisant radialement saillie en direction du carter du corps de vanne.

12. Corps de vanne selon la revendication 11, **caractérisé en ce que** le joint se situe dans le plan de séparation des parties du corps de vanne.

13. Corps de vanne selon la revendication 11 ou 12, **caractérisé en ce qu'**au moins une des parties du corps de vanne présente, dans le plan de séparation, sur la surface intérieure, une rainure (62) logeant le joint.
